Europäisches Patentamt

European Patent Office

Office européen des brevets

(19)

(11) Numéro de publication: **0 083 997**

**A1**

(12) **DEMANDE DE BREVET EUROPEEN**

(21) Numéro de dépôt: **83400006.9**

(22) Date de dépôt: **04.01.83**

(51) Int. Cl.³: **B 23 K 15/00**

(30) Priorité: **04.01.82 FR 8200012**

(43) Date de publication de la demande:
**20.07.83 Bulletin 83/29**

(84) Etats contractants désignés:
**DE FR GB IT NL SE**

(71) Demandeur: **LA SOUDURE AUTOGENE FRANCAISE**
**75, Quai d'Orsay**
**F-75007 Paris(FR)**

(71) Demandeur: **COMMISSARIAT A L'ENERGIE ATOMIQUE**
**Etablissement de Caractère Scientifique Technique et**
**Industriel**
**B.P. 510**
**F-75752 Paris Cedex 15(FR)**

(72) Inventeur: **Guedra, Jean-Paul**
**15, rue de Pontoise Vallangoujard**
**F-95750 Arronville(FR)**

(74) Mandataire: **Leclercq, Maurice et al,**
**L'AIR LIQUIDE SOCIETE ANONYME POUR L'ETUDE ET**
**L'EXPLOITATION DES PROCEDES GEORGES CLAUDE**
**75, Quai d'Orsay**
**F-75321 Paris Cedex 7(FR)**

(54) Installation de soudage par faisceau d'électrons.

(57) L'invention concerne une installation de soudage par faisceau d'électrons.

L'ensemble canon (4) monté sur poutre-support formant enceinte de prévidage (10) est monté à faible débattement vertical sur le bâti (1) de façon à venir en appui sur l'unité servante (20) exactement positionnée en (100) (101) (102) (103). On évite ainsi tout déplacement vertical de cette unité servante (20) qui est lourde et encombrante.

Application au soudage automatique.

FIG.1

EP 0 083 997 A1

" INSTALLATION DE SOUDAGE PAR FAISCEAU D'ELECTRONS "

La présente invention concerne une installation de soudage par faisceau d'électrons, du genre comprenant un canon à électrons associé à des moyens de vidage de canon, une préenceinte de vide-tampon associée à des moyens de vidage de préenceinte, au moins un couple de passages alignés dans deux parois opposées de préenceinte, dont au moins celui du côté opposé au canon est associé à une vanne d'étanchéité, ledit canon étant monté à solidarisation sur ladite préenceinte formant poutre-support avec son axe adapté à venir en une position coaxiale avec le passage à vanne d'étanchéité, ladite préenceinte étant elle-même solidarisée en porte-à-faux, à une extrémité, à un bâti au sol.

Dans ce genre d'installation, qui met en oeuvre généralement un canon monté à déplacement relatif sur la préenceinte, avec une préenceinte qui présente au moins deux passages à vanne d'étanchéité alignés selon la direction de déplacement du canon, on peut mettre en oeuvre des cadences opératoires particulièrement rapides car on peut ainsi associer à l'installation de soudage deux chambres de soudage, cycliquement en opération de soudage avec les pièces en position appropriée dans une telle chambre de soudage, sous vide rapidement atteint grâce à l'enceinte-tampon, tandis que l'autre chambre de soudage est mise à l'air libre et rechargée en pièces à souder avant d'être à nouveau mise sous dépressurisation. L'accroissement des cadences qui en résulte nécessite un ravitaillement non seulement automatique des chambres de soudage mais également un important stockage de pièces et des moyens d'alimentation très efficaces. Pour permettre une grande souplesse de ce genre d'installation, qui autorise le soudage de pièces de structure et dimension différentes, on a été amené à associer étroitement les enceintes de soudage avec une unité servante de soudage incorporant, dans un châssis mobile au sol, des moyens d'alimentation en pièces à souder vers au moins une chambre de soudage présentant une paroi supérieure avec un passage. On amène l'unité servante en dessous et à l'aplomb de la préenceinte associée au canon de soudage et on relève cette unité servante de façon à venir appliquer de façon étanche le passage de chaque chambre de soudage contre chacun des passages à vanne de préenceinte.

Avec l'accroissement des cadences, on a été amené à prévoir des moyens particulièrement développés à la fois en stockage et en automatisation pour alimenter les chambres de soudage, en sorte que l'unité servante a vu son encombrement et son poids croître dans des proportions telles que l'opération de mise en application étanche contre l'enceinte de soudage s'est révélée délicate, notamment du fait que les déformations de flexibilité du châssis conduisaient à des défauts d'étanchéité à l'endroit de la jonction chambre de soudage-préenceinte, défauts qui, même faibles, ont une répercussion décisive sur l'obturation d'un vide de soudage correct.

La présente invention a pour objet de pallier cet inconvénient et d'assurer sans difficulté la venue en contact parfaitement étanche de la préenceinte supportant le canon avec l'unité servante.

Selon l'invention, la solidarisation de l'enceinte formant poutre-support de canon avec le bâti est du type à glissière à course linéaire de faible débattement et l'unité servante est équipée de moyens de mise en position en appui sur des moyens de butée fixes par rapport au bâti, localisés pour que chaque passage de paroi supérieure d'une chambre de soudage se situe, dans ladite position en butée, en dessous et rigoureusement à l'aplomb d'un passage homologue de la préenceinte, à une distance dudit passage qui est inférieure au débattement linéaire de l'enceinte formant poutre-support. De la sorte, la venue en jonction étanche d'une chambre de soudage solidaire de l'unité servante avec la préenceinte supportant le canon s'effectue par simple déplacement de cette préenceinte supportant le canon, qui constitue un ensemble déplaçable de poids et d'encombrement très inférieurs à ceux de l'unité servante. En outre, ce déplacement s'effectue de préférence verticalement vers le bas, ce qui assure, par simple appui dû au poids de la préenceinte et du canon, le maintien de l'étanchéité de la jonction. L'expérience a montré que cette façon de faire évite à coup sûr les inconvénients mentionnés plus haut et permet la mise en oeuvre, sans interruption due à des fuites d'étanchéité, de l'installation de soudage.

Avantageusement, dans une installation de soudage rappelée plus haut, au moins une partie des moyens de pompage de préenceinte comprenant ceux débouchant à l'air libre est solidaire du bâti, tandis que l'aspiration est raccordée à une conduite extensible autorisant un accroissement de longueur dans le sens de la glissière de préenceinte au moins égal au débattement de ladite préenceinte ; dans une forme particulière de réalisation, la conduite extensible raccordée directement à la préenceinte est métallique et comporte un soufflet métallique d'extension d'axe parallèle aux glissières de préenceinte.

De même, et avantageusement, au moins une partie des moyens de pompage de canon qui débouchent à l'air libre est solidaire du bâti et, selon une forme préférentielle de réalisation, les moyens de pompage de canon, qui débouchent dans le canon, sont montés à solidarisation sur ledit canon et raccordés aux moyens de pompage solidarisés au bâti par une conduite flexible.

Les caractéristiques et avantages de l'invention ressortiront d'ailleurs de la description qui suit en référence aux dessins annexés dans lesquels :

- la figure 1 est une vue en perspective d'une installation de soudage selon l'invention ;
- la figure 2 est une vue en coupe horizontale à échelle agrandie du montage à glissière dans la préenceinte sur le bâti ;
- la figure 3 est une vue en coupe verticale de la préenceinte ;
- la figure 4 est une vue de dessus de cette même préenceinte, canon retiré et partiellement en coupe horizontale ;
- la figure 5 est une vue partielle en coupe du canon.

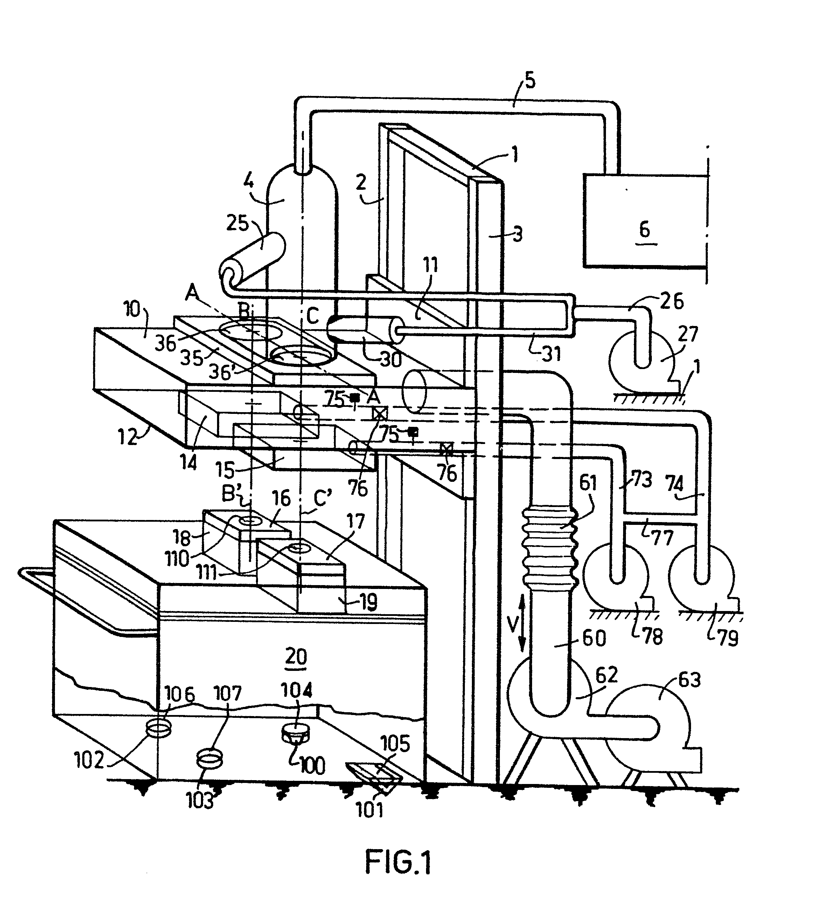

En se référant à la figure 1, une installation de soudage par faisceau d'électrons comporte, solidaire d'un bâti 1 à montants verticaux 2 et 3, essentiellement :

- un canon à électrons 4 raccordé par un câble électrique flexible 5 à générateur à haute tension 6 ;
- en dessous du canon 1, un moyen de déplacement de canon 3 selon une direction horizontale AA' contre lequel s'appuie et peut se déplacer le canon 1 ;

- en dessous du moyen de déplacement 8, une préenceinte sous vide permanent 10, en forme de poutre parallélépipédique rectangle, fixée à une extrémité sur les montants 2 et 3 par l'intermédiaire d'une glissière 11, et qui supporte le moyen de déplacement 8 et le canon 1 ;

- en dessous de la poutre-enceinte 10 et solidarisées à une paroi inférieure 12 de la préenceinte 10 sont agencées deux têtes de pompage 14-15 destinées à coopérer avec des faces supérieures 16-17 respectivement de deux chambres de soudage 18-19 respectivement, solidaires d'une unité servante 20 agencée au sol.

On va détailler maintenant successivement les principaux éléments constitutifs de cette installation de soudage.

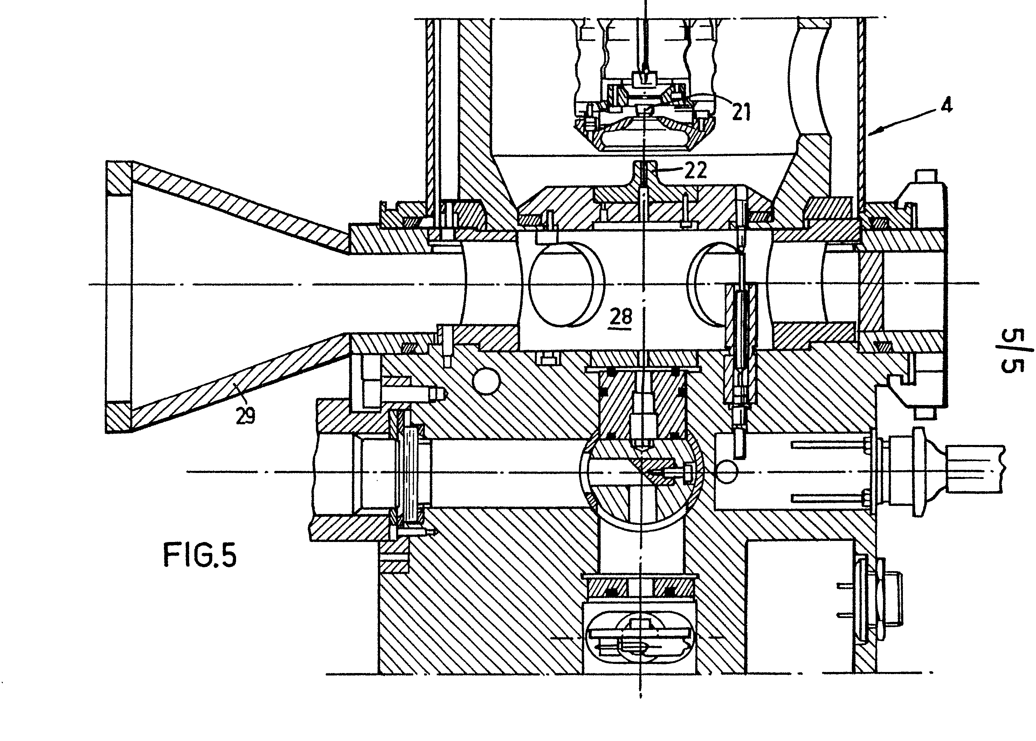

Le canon 4 (voir figures 1 et 5) comporte une cathode 21, une anode 22 ainsi que les moyens de création, de focalisation et de déviation de faisceau électronique connus en soi et non décrits. Ce qu'il est intéressant de noter, c'est que l'espace intérieur du canon est associé à une pompe turbo-moléculaire 25 dont le corps est rigidement fixé, à l'extérieur, sur le canon 4 et cette pompe turbo-moléculaire 25 est elle même raccordée par une conduite non rigide 26 à une pompe à palettes 27 solidarisée de façon fixe par rapport au bâti 1.

Ainsi qu'on le voit plus précisément dans la figure 5, on a aménagé, en dessous de l'anode 22, une chambre de pompage auxiliaire 28 destinée à éviter toute remontée d'air vers l'anode et la cathode -ce qui détérioriserait la cathode- et cette chambre intermédiaire est raccordée par un conduit 29 à une pompe turbo-moléculaire 30 qui se branche par une conduite non rigide 31 sur la conduite 26, et est ainsi soumise également à l'action de la pompe à palettes 27.

Le moyen de déplacement de canon 8 est constitué essentiellement d'une plaque-support de déplacement 35 présentant une ouverture de forme oblongue 36 ou deux ouvertures 36, 36', des moyens de coulissement selon la direction horizontale AA' pour le canon 4, qui sont équipés à leur périphérie de joints d'étanchéité. Un vérin commande le déplacement du canon d'une position extrême (axe vertical BB') à une autre position extrême (axe vertical CC').

La préenceinte de vide permanent 10 présente, dans sa paroi supérieure une ouverture oblongue 42 coextensive à l'ouverture 36 de la plaque-support de déplacement 35 et, dans sa paroi inférieure des passages 43 (44), alignés parallèlement à la direction AA' et situés dans des positions sur les axes BB' et CC', telles que le canon 4 puisse se présenter soit en regard du passage 43, soit en regard du passage 44, lorsqu'il passe d'une position BB' à l'autre position CC' grâce à son moyen de déplacement 8, l'ouverture 35 et l'ouverture 42 s'étendant selon AA' de façon à surplomber et circonscrire les deux passages 43 et 44.

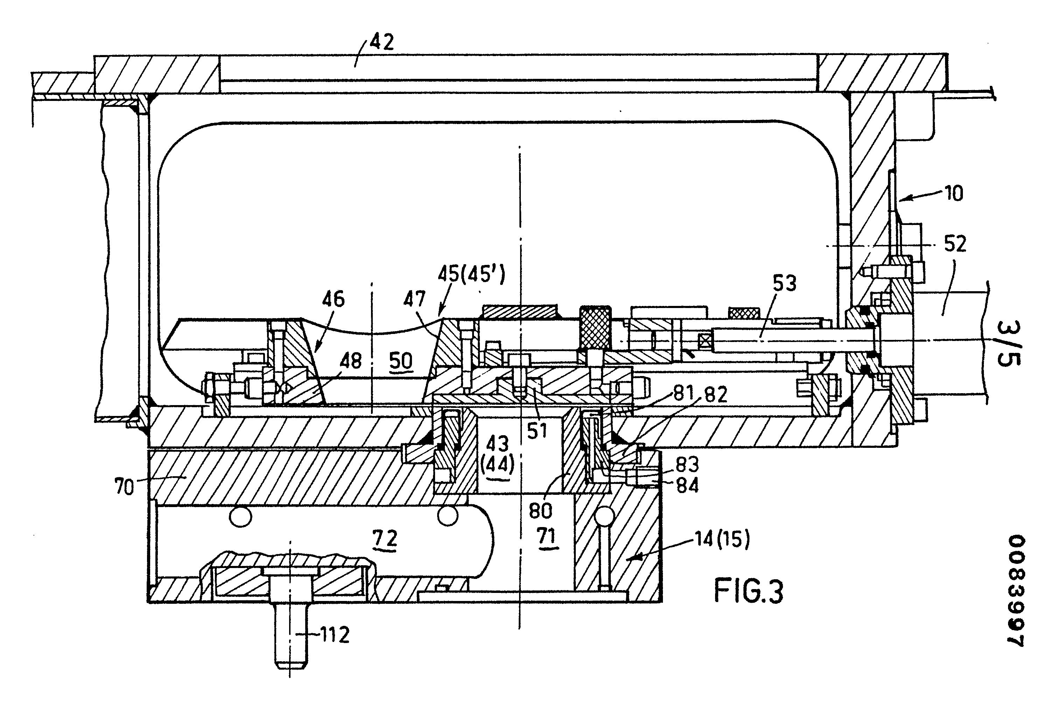

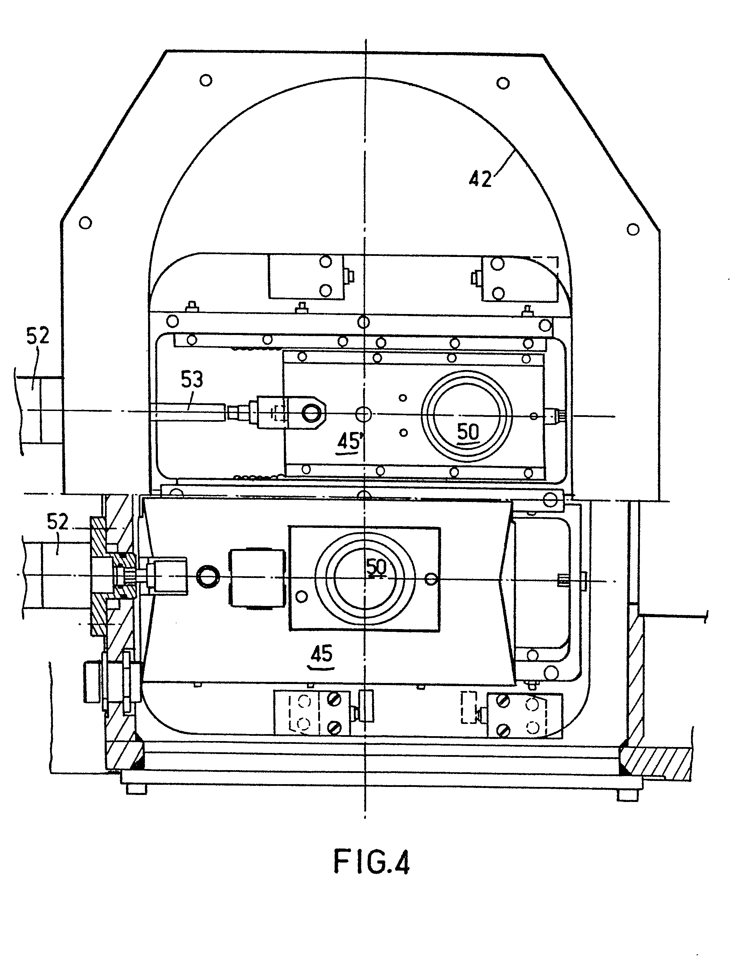

Chaque passage 43, 44 est équipé d'une vanne à vérin 45 (45') décrite aux figures 3 et 4 et qui comporte un équipage mobile 46 formé de deux plaques 47-48 superposées et solidarisées et présentant, près d'une extrémité, un large passage transversal 50 et, près d'une autre extrémité, une plaque obturatrice 51 qui permet d'obturer l'un des passages d'enceinte 43 (ou 44). Cet équipage mobile 46 est associé à un vérin 52 auquel il est raccordé par une tige de vérin 53. Dans la position rétractée de la tige 53 dans le vérin 52 le passage 43 est ouvert, l'évidement 50 se présentant alors axialement au regard de ce passage 43. Bien entendu, cette ouverture est commandée exclusivement pendant l'émission du faisceau électronique, c'est-à-dire pendant la phase de soudage proprement dite.

En se référant maintenant à la figure 1, la préenceinte 10 est raccordée, par une large conduite métallique 60 incorporant un soufflet métallique 61 à dilatation selon la direction verticale V, à un premier moyen de pompage 62 qui peut être une pompe du type "Roots" qui est fixée au sol ou sur le bâti 1, ce moyen de pompage 62 communiquant lui-même dans un second moyen de pompage 63 débouchant à l'air libre qui peut être une pompe du type à palettes, et qui est également à poste fixe au sol, ou sur le bâti 1.

Ainsi qu'on le voit aux figures 1 et 3, la préenceinte 10 supporte sur sa face inférieure deux têtes de pompage 14 (et 15) formée chacune essentiellement d'une plaque de raccordement 70 avec un passage 71 aligné avec le passage 43 (44) se poursuivant par un large conduit transversal 72 raccordé par une conduite flexible 73 (74) incorporant chacune une vanne de mise à l'air 75 et une vanne de·fermeture 76. Les conduites 73 (74) se réunissent en une conduite commune 77 elle-même raccordée en parallèle à deux moyens de vidage d'enceinte de soudage, qui peuvent être des pompes à palettes 78 et 79 et qui sont montées à poste fixe sur le bâti ou au sol.

On note que le passage 43 (44) est en fait formé par un manchon 80 associé à un joint d'étanchéité gonflable 81 formé d'un boyau circulaire dont les bords sont enserrés de façon étanche entre une collerette 82, le manchon 80 et une couronne interne 83 à canal de gonflage - dégonflage 84.

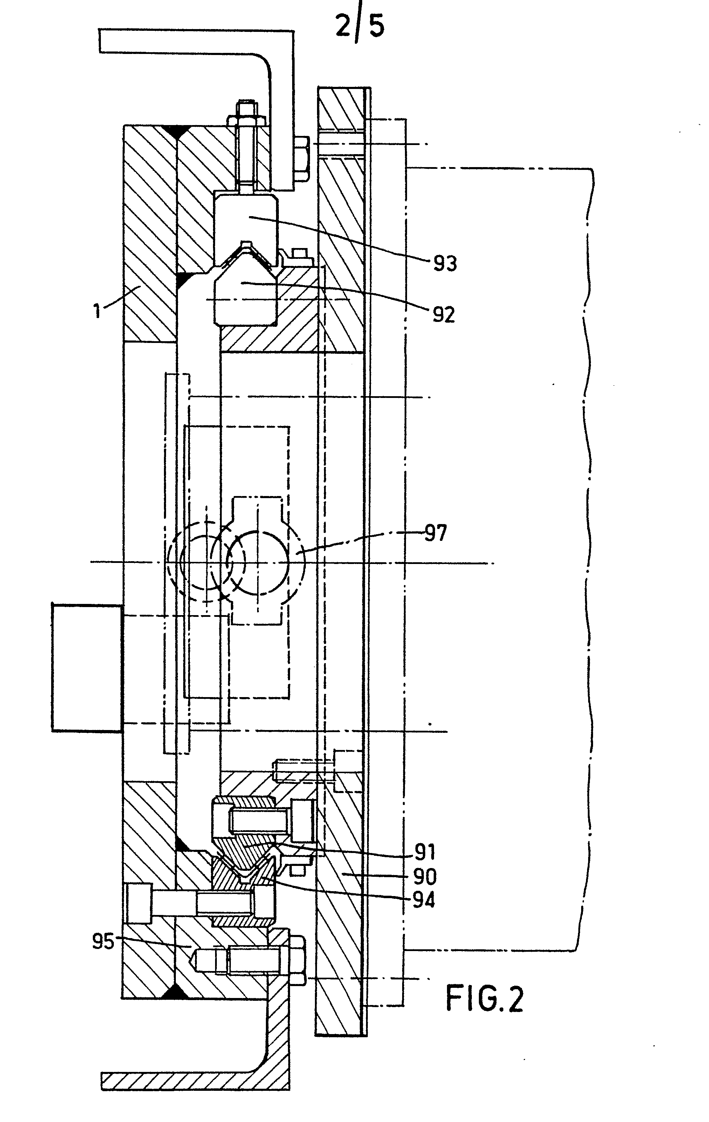

En se référant maintenant à la figure 2, la poutre-enceinte 10 est montée par l'intermédiaire d'une plaque-support 90 et deux glissières 91 et 92 sur deux rails verticaux 93-94 solidaires par l'intermédiaire d'un cadre 95 au bâti 1. La plaque 90 est elle-même soumise à l'action d'un vérin 97. De la sorte, sous l'action du vérin 97, la plaque 90 peut entraîner, dans le sens vertical ascendant et selon un débattement d'amplitude relativement faible de 50 à 100 mm, par exemple et dans un cas précis de 70 mm, la poutre-support 10 à laquelle sont solidarisés le canon 4 et son moyen de déplacement 8.

En se référant à nouveau à la figure 1, l'unité servante 20 équipée de deux chambres de soudage 18 et 19 comprend les moyens automatiques de stockage, d'alimentation et de mise en position dans chacune des chambres d'usinage 18-19 des pièces à souder et cette unité servante n'est pas détaillée sous cet aspect qui ne fait pas partie de l'invention. Il suffit de noter que l'unité servante 20, outre qu'elle incorpore les deux chambres d'usinage 18 et 19 est équipée, à son extrémité inférieure, de moyens de mise en place qui sont parfaitement délimités par rapport au bâti 1. Ces moyens de mise en place comprennent, solidairement avec le bâti 1 ou avec le sol, une butée tronconique 100 et, à distance de celle-ci une butée linéaire 101 formée par une pièce en forme de V, les deux butées étant encastrées dans le sol ou dans une plaque de bâti , la ligne de sommet V étant horizontale et rencontrant à angle droit l'axe vertical de la butée tronconique 100. En outre, on prévoit dans le sol ou sur la plaque de bâti deux autres butées d'appui plates 102 et 103. Solidairement de l'unité servante, et apparaissant sur sa face inférieure, sont agencés deux pieds, l'un cônique 104 adapté à s'emboîter exactement dans la butée tronconique 100, l'autre en forme de prisme 105 adapté à s'engager très exactement face contre face dans la butée 101 ainsi que deux autres appuis plats 106, 107 adaptés à reposer face contre face adaptés à reposer sur les butées plates 102 - 103 respectivement. De façon avantageuse, l'unité servante est équipée de patins inférieurs alimentés en air sous pression, formant coussins d'air adaptés, en fonctionnement, à soulever l'unité servante légèrement au-dessus du sol pour la déplacer à la main vers la position correcte par où elle s'encastre par simple suppression de l'effet pneumatique.

En fonctionnement, l'installation de soudage est commandée de la façon suivante : on agit sur le vérin 97 de façon à amener la poutre-préenceinte 10 avec le canon 4 dans la position haute; ce déplacement à course limitée, comme on l'a vu précédemment, est rendu possible par la flexibilité des conduites 26, 31, 73, 74, et grâce à la dilatation linéaire du soufflet 61 de la conduite métallique 60 raccordée à l'enceinte 10. Avant et pendant cette opération, on procède à la mise en service des pompes 25, 30, 27 qui créent un vide très poussé dans le canon 4, et à la mise en service des pompes 62 et 63 qui maintiennent une dépression appropriée dans la préenceinte 10, les vannes 43 et 44 étant bien entendu toutes deux en position fermée, joints d'étanchéité 81 gonflés. Les joints d'étanchéité à l'endroit du moyen de déplacement 8 assurent l'étanchéité du canon 4 et de la préenceinte vers l'extérieur, la vanne de canon étant bien entendu fermée.

L'unité servante 20 mise en suspension pneumatique est alors amenée en dessous de la préenceinte 10, ce qui est rendu possible grâce au fait que cette préenceinte 10 est en position haute. Une fois que l'unité servante 20 est à peu près en position, l'effet de suspension pneumatique est supprimé et les pieds 104-105 viennent s'encastrer dans les butées 100-101 comme décrit précédemment, assurant ainsi, en collaboration avec les butées d'appui 106-107, la mise en place extrêmement précise de l'unité servante 20 en une position où des ouvertures 110-111 des faces supérieures des chambres de soudage 18-19 sont rigoureusement coaxiales aux passages circulaires 43-44 (axes BB', CC' respectivement) de la préenceinte 10.

Après quoi, le vérin 97 est décomprimé, ce qui assure la descente de l'ensemble préenceinte 10 - canon 4 jusqu'à ce que les faces inférieures des deux plaques 70 de têtes de pompage 14 et 15 viennent en appui contre les faces supérieures des chambres de soudage 18 et 19, l'étanchéité entre chacune des têtes de pompage 14 (15) et une chambre 18 (19) étant assurée par un joint ; pour plus de sécurité, des doigts d'indexage 112, chacun solidaire d'une plaque 70 vient s'engager normalement dans un fourreau métallique de même dimension solidaire de l'unité servante 20. La commande de soudage peut alors être mise en service et l'une des chambres 18 (ou 19) peut être alimentée en pièces à souder par des moyens automatiques non décrits. Simultanément, le canon 4 se déplace, si ce n'est déjà fait, par son moyen de déplacement 3, de façon à ce que son axe vienne en alignement avec l'axe du passage 43 (ou 44). Une fois la chambre de soudage 18 (ou 19) ravitaillée en pièces, elle est fermée de façon étanche et les moyens de pompage associés à cette chambre, c'est-à-dire les pompes 77 et 78 sont mises en action pour assurer un prévidage de cette enceinte de soudage 18 (ou 19). Après quoi, la vanne 76 est fermée et la vanne 45 (46) est commandée à l'ouverture, ce qui fait communiquer la chambre de soudage 18 (ou 19) avec la préenceinte 10 assurant immédiatement un vide relativement poussé dans cette chambre de soudage 18 (ou 19). L'opération de soudage peut alors être immédiatement entreprise par l'ouverture de la vanne de canon et l'émission d'un faisceau électronique par le canon 4.

Pendant cette opération de soudage, bien entendu, l'autre chambre de soudage 19 (ou 18) est, dans le cours d'un cycle de soudage, d'abord mise à l'air libre via la vanne 75, puis évacuée des pièces précédemment soudées et ravitaillée en de nouvelles pièces à souder de la façon indiquée ci-dessus. Une fois l'opération de soudage effectuée dans la chambre de soudage 18 (ou 19), le moyen de mouvement 3 du canon 4 assure son déplacement d'une position BB' à une position CC' en regard de l'ouverture de l'autre vanne 45' (45) et une nouvelle opération cyclique de soudage dans la chambre 19 (18) et de chargement-déchargement dans la chambre 18 (19) peut alors être effectuée.

L'installation de soudage qui vient d'être décrite est notamment adaptée au soudage automatique à très forte cadence de pièces métalliques telles que leviers de vitesse pour voiture, engrenage sur arbre, etc ...

## REVENDICATIONS

1. Installation de soudage par faisceau d'électrons, du genre comprenant un canon à électrons associé à des moyens de vidage de canon, une préenceinte de vide-tampon associée à des moyens de vidage de préenceinte, au moins un couple de passages alignés dans deux parois opposées de préenceinte associé au moins du côté opposé au canon à des vannes d'étanchéité, ledit canon étant monté à solidarisation sur ladite préenceinte formant poutre-support avec son axe selon la direction d'alignement dudit couple de passages de préenceinte, ladite préenceinte étant elle-même solidarisée en porte-à-faux à une extrémité à un bâti au sol, caractérisée en ce que la solidarisation de ladite préenceinte formant poutre avec ledit bâti est du type à glissière à course linéaire de faible débattement.

2. Installation de soudage selon la revendication 1, caractérisée en ce que la glissière est à extension verticale.

3. Installation de soudage selon la revendication 1, caractérisée en ce que le canon est monté sur la préenceinte formant poutre à déplacement relatif dans un plan perpendiculaire au plan de la glissière et en ce que la préenceinte présente au moins deux couples de passages alignés selon la direction de déplacement du canon.

4. Installation de soudage selon l'une quelconque des revendications 1 à 3, caractérisée en ce qu'au moins une partie des moyens de pompage de préenceinte, comprenant ceux débouchant à l'aval à l'air libre, est solidaire du bâti, tandis que l'amont est raccordé à une conduite extensible autorisant un accroissement de longueur au moins égal au débattement de préenceinte.

5. Installation de soudage selon la revendication 4, caractérisée en ce que la conduite extensible raccordée directement à la préenceinte est métallique et comporte un soufflet métallique d'extension.

6. Installation de soudage selon l'une quelconque des revendications 1 à 3, caractérisée en ce qu'au moins une partie des moyens de pompage de canon, qui débouchent à l'air libre, est solidaire du bâti.

7. Installation de soudage selon la revendication 6, caractérisée en ce que les moyens de pompage de canon, qui débouchent
dans le canon, sont montés à solidarisation sur ledit canon et raccordés au moyen de pompage solidarisé au bâti par une conduite flexible.

8. Installation de soudage selon l'une quelconque des revendications 1 à 7, caractérisée en ce qu'elle comprend une unité
servante de soudage incorporant, dans un châssis mobile au sol, des
moyens d'alimentation en pièces à souder vers au moins une chambre
de soudage présentant une paroi supérieure avec un passage, caractérisée en ce que ladite unité servant est équipée de moyens de mise
en appui sur des moyens de butée fixe par rapport au bâti, de façon
que chaque passage de paroi supérieure d'une chambre de soudage se
situe, dans ladite position en butée, en dessous et à l'aplomb d'un
passage homologue de la préenceinte, à une distance dudit passage qui
est inférieure au débattement linéaire de la poutre-support.

9. Installation de soudage selon la revendication 8, caractérisée en ce que les moyens de mise en place en appui sur des moyens
de butée comprennent :
- une première butée, selon le sens vertical ;
- une deuxième butée, selon le sens horizontal ;
- au moins une butée plane.

FIG.1

FIG.2

FIG.3

FIG.4

FIG.5

# RAPPORT DE RECHERCHE EUROPEENNE

**0083997**

Numéro de la demande

Office européen des brevets

EP 83 40 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 497 665 (GERARD)<br>* Colonne 2, ligne 61 - colonne 7, ligne 53; figures 1-7 * | 1-3 | B 23 K 15/00 |
| Y | US-A-3 437 785 (SCIAKY)<br><br>* Colonne 3, ligne 16 - colonne 6, ligne 55; figures 1,2 * | 1,4,6,<br>7 | |
| A | FR-A-1 404 827 (SCIAKY)<br>* Page 1, colonne 2, alinéa 9 - page 3, colonne 2, alinéa 1; figures 1,2 * | 1,3 | |
| A | FR-A-2 252 162 (C.E.A.)<br>* Page 4, ligne 17 - page 8, ligne 8; figures 1-4 * | 1 | |

DOMAINES TECHNIQUES RECHERCHES (Int. Cl. ³)

B 23 K 15/00

Le présent rapport de recherche a été établi pour toutes les revendications

| Lieu de la recherche | Date d'achèvement de la recherche | Examinateur |
|---|---|---|
| LA HAYE | 29-03-1983 | DEMOLDER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82